# EUROPÄISCHE PATENTSCHRIFT

(11) **EP 0 700 937 B1**
(45) Veröffentlichungstag und Bekanntmachung des Hinweises auf die Patenterteilung: **16.02.2000**
(21) Anmeldenummer: 95117503.3
(22) Anmeldetag: 16.05.1990
(51) Int. Cl.: C08F 10/02, C08F 4/602, C08F 10/00, C07F 17/00

(54) **Verfahren zur Herstellung von Ethylenpolymeren**
Process for preparing ethylene polymers
Procédé de préparation de polymères d'éthylène

(30) Priorität: 20.05.1989 DE 3916555
(43) Veröffentlichungstag der Anmeldung: 13.03.1996
(62) Teilanmeldung aus: 90109207.2
(73) Patentinhaber: TARGOR GmbH, 55116 Mainz (DE)
(72) Erfinder: Spaleck, Walter, Dr., D-65835 Liederbach (DE); Antberg, Martin, Dr., D-65719 Hofheim (DE); Böhm, Ludwig, Dr., D-65795 Hattersheim (DE); Rohrmann, Jürgen, Dr., D-65779 Kelkheim (DE); Lüker, Hartmut, Dr., D-65719 Hofheim (DE)

(56) Entgegenhaltungen:
- EP-A- 0 185 918
- EP-A- 0 355 446
- EP-A- 0 426 645
- J. AM. CHEM. SOC., Bd. 110, 1988, Seiten 6255-6256, XP002019383 EWN JOHN A.: "Syndiospecific propylene polymerizations with group 4 metallocenes"

## Beschreibung

Die vorliegende Erfindung bezieht sich auf ein Verfahren zur Herstellung von Polyethylen und Ethylen-1-Olefin-Copolymeren verschiedener Molmassenbereiche mit Hilfe von Metallocen-Aluminoxan-Katalysatoren.

Ein Verfahren zur Herstellung von Polyethylen mit Hilfe von Metallocen-Aluminoxan-Katalysatoren in Toluol als Suspensionsmittel ist bereits beschrieben worden [vgl. EP 69951]. Die erreichten Molmassen des Polymeren sind relativ niedrig. Über die Morphologie der Polymerisate ist nichts angegeben.

Weiterhin ist ein vergleichbares Verfahren mit einem hochsiedenden Kohlenwasserstoff als Suspensionsmittel bekannt (vgl. EP 170059). Die Katalysatoraktivitäten sind allerdings mäßig, die erreichten Schüttdichten des Polymeren liegen zwischen 0,15 und 0,18 g/cm³.

Weiterhin sind Verfahren zur Herstellung von Polyethylen und Ethylen-1-Olefin-Copolymeren mit Hilfe von Metallocen-Aluminoxan-Katalysatoren durch Polymerisation in der Gasphase beschrieben worden (vgl. EP 206794, 285443 und 294942). Auch hier werden nur mäßig hohe Molmassen der Polymeren und größtenteils nur schlechte Aktivitäten der Katalysatoren erreicht. EP-A-0 355 446 beschreibt die Polymerisation von Propylen mit Indenylcyclopentadienyl-dimethylsilyl-hafniumdichlorid oder -zirkoniumdichlorid/Aluminoxan-Katalysatoren.

Allen vorgenannten Verfahren ist gemeinsam, daß als Metallocen unverbrückte Biscyclopentadienylzirkonkomplexe eingesetzt werden, wobei die Cyclopentadienylreste substituiert oder nichtsubstituiert sind und das Metallocen entweder als solches in die Polymerisation eingesetzt oder durch entsprechende Vorreaktionsschritte mit einem inerten Träger verknüpft worden ist.

Es wurde nun gefunden, daß die Herstellung von Polyethylen und Ethylen-1-Olefincopolymeren im Suspensions- oder Gasphasenverfahren mit Hilfe von Metallocen-Aluminoxan-Katalysatoren, deren Metallocen-Komponente ein verbrückter Biscyclopentadienylkomplex ist, interessante Vorteile bietet.

Die Erfindung betrifft somit ein Verfahren zur Herstellung von Ethylenpolymeren durch Polymerisation von Ethylen oder Copolymerisation von Ethylen mit 1-Olefinen mit 3 bis 20 C-Atomen bei einer Temperatur von -60 bis 200°C, bei einem Druck von 0,5 bis 200 bar, in Lösung, in Suspension oder in der Gasphase, in Gegenwart eines Katalysators, welcher aus einem Metallocen als Übergangsmetallkomponente und einem Aluminoxan der Formel II 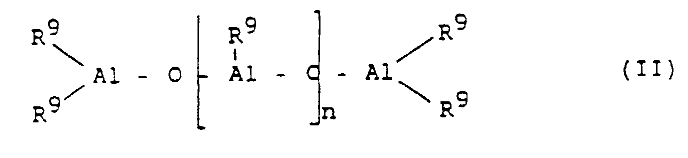 für den linearen Typ und/oder der Formel III 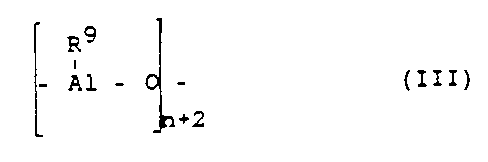 für den cyclischen Typ besteht, wobei in den Formeln II und III R⁹ eine C₁-C₆-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente eine Verbindung der Formel I 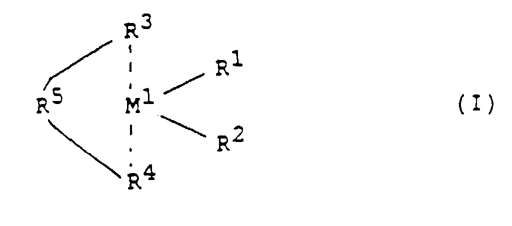 ist worin,
- M¹: Titan, Zirkon, Hafnium, Vanadium, Niob oder Tantal ist,
- R¹ und R²: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R³ und R⁴: gleich oder verschieden sind und einen ein- oder mehrkernigen Kohlenwasserstoffrest, welcher mit dem Zentralatom M¹ eine Sandwichstruktur bilden kann, bedeuten,
- R⁵: 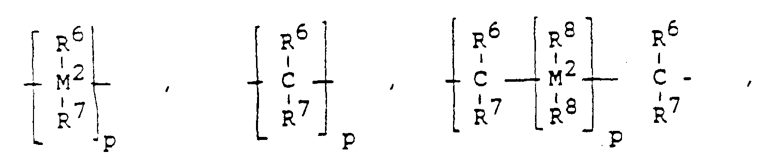 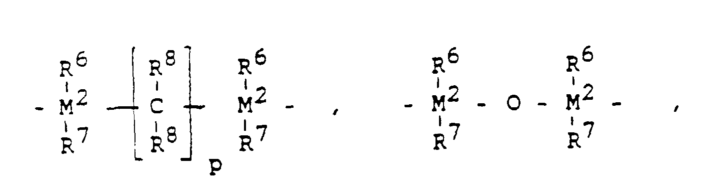 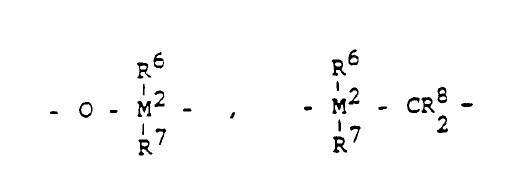 = BR⁶, = AlR⁶, -Ge- -Sn-, -O-, -S-, = SO, = SO₂, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ oder R⁶ und R⁸ jeweils mit den sie verbindenen Atomen einen Ring bilden,
- M²: Silizium, Germanium oder Zinn ist und
- p: die Zahlen 1, 2, 3, 4, 5 bedeutet,
wobei als Metallocen Indenylcyclopentadienyl-dimethylsilyl-hafniumdichlorid oder Indenylcyclopentadienyldimethylsilyl-zirkoniumdichlorid ausgeschlossen sind.

Der für das erfindungsgemäße Verfahren zu verwendende Katalysator besteht aus einem Aluminoxan und einem Metallocen der Formel I 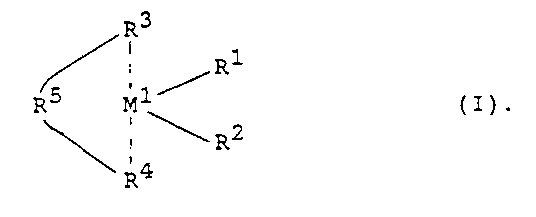 In Formel I ist M¹ ein Metall aus der Gruppe Titan, Zirkon, Hafnium, Vanadium, Niob und Tantal, vorzugsweise Zirkon.

R¹ und R² sind gleich oder verschieden und bedeuten ein Wasserstoffatom, eine C₁-C₁₀-, vorzugsweise C₁-C₃-Alkylgruppe, eine C₁-C₁₀-, Vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³ und R⁴ sind gleich oder verschieden und bedeuten einen ein- oder mehrkernigen Kohlenwasserstoffest, welcher mit dem Zentralatom M¹ eine Sandwichstruktur bilden kann.

Bevorzugt sind R³ und R⁴ Cyclopentadienyl, Indenyl, Tetrahydroindenyl oder Fluorenyl, wobei die Grundkörper noch zusätzliche Substituenten tragen können.

R⁵ ist eine ein- oder mehrgliedrige Brücke, welche die Reste R³ und R⁴ verknüpft und bedeutet 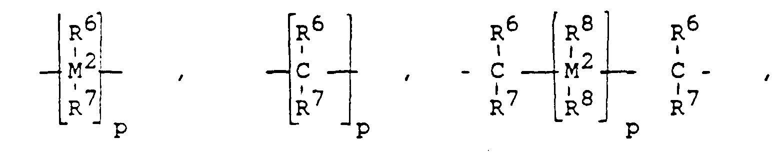 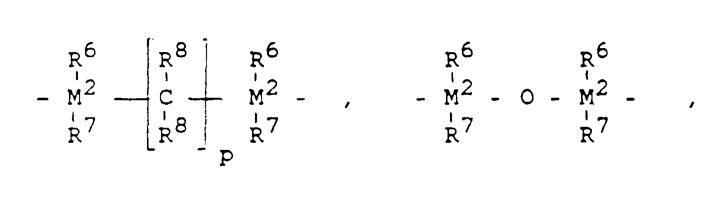 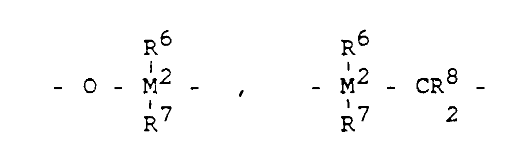 = BR⁶, = AlR⁶, -Ge-, -Sn-, -O-, -S-, = SO, = SO₂, = NR⁶, = CO, = PR⁶ oder = P(O)R⁶, wobei R⁶, R⁷ und R⁸ gleich oder verschieden sind und ein Wasserstoffatom, ein Halogenatom, vorzugsweise Chlor, eine C₁-C₁₀-, vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-vorzugsweise C₈-C₁₂-Arylalkenylgruppe eine C₈-C₄₀-, vorzugsweise C₈-C₁₂-Arylalkenylgnuppe oder eine C₇-C₄₀-, vorzugsweise C₇-C₁₂-Alkylarylgruppe bedeuten, oder R⁶ und R⁷ oder R⁶ und R⁸ bilden jeweils zusammen mit den sie verbindenden Atomen einen Ring.
- M²: ist Silizium, Germanium oder Zinn, bevorzugt Silizium oder Germanium.
- p: bedeutet die Zahlen 1,2,3,4,5,
wobei als Metallocen Indenylcyclopentadienyl-dimethylsilyl-hafniumdichlorid oder Indenylcyclopentadienyldimethylsilyl-zirkoniumdichlorid ausgeschlossen sind.

Besonders bevorzugte Metallocene sind: rac-Dimethylsilylbis (1-indenyl)zirkondichlorid, rac-Diphenylsilylbis(1-indenyl)zirkondichlorid, 1-Silacyclobutylbis(1'-indenyl)zirkondichlorid, rac-Dimethylsilylbis(1-(3-methylindenyl))zirkondichlorid, rac-1,1,2,2-Tetramethyldisilaethylenbis(1'-indenyl),zirkondichlorid, Dimethylsilylbis(1-(3-trimethylsilyl)cyclopentadienyl)-zirkondichlorid und Diphenylmethylen(9-fluorenyl)cyclopentadienylzirkondichlorid.

Die vorstehend beschriebenen Metallocene können nach folgendem allgemeinen Reaktionsschema hergestellt werden: 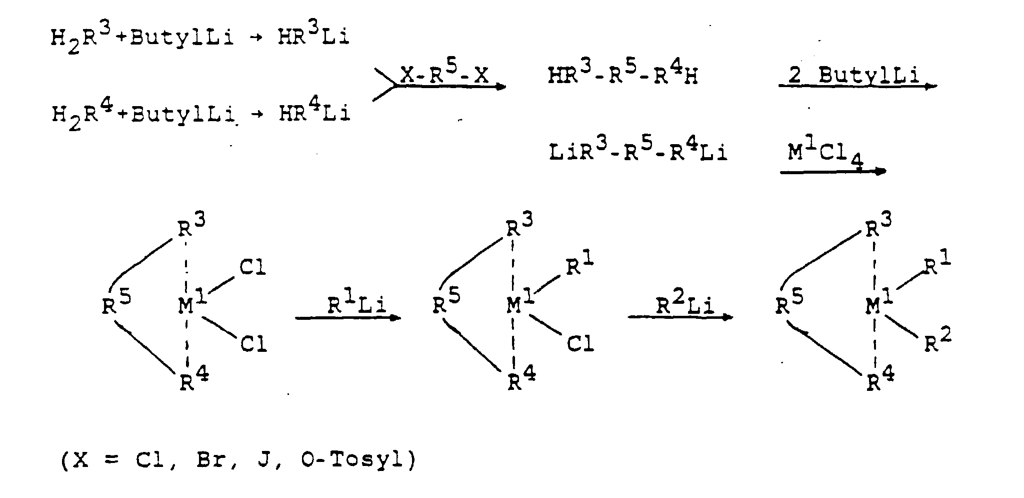 oder
H₂R³ + ButylLi → HR³Li

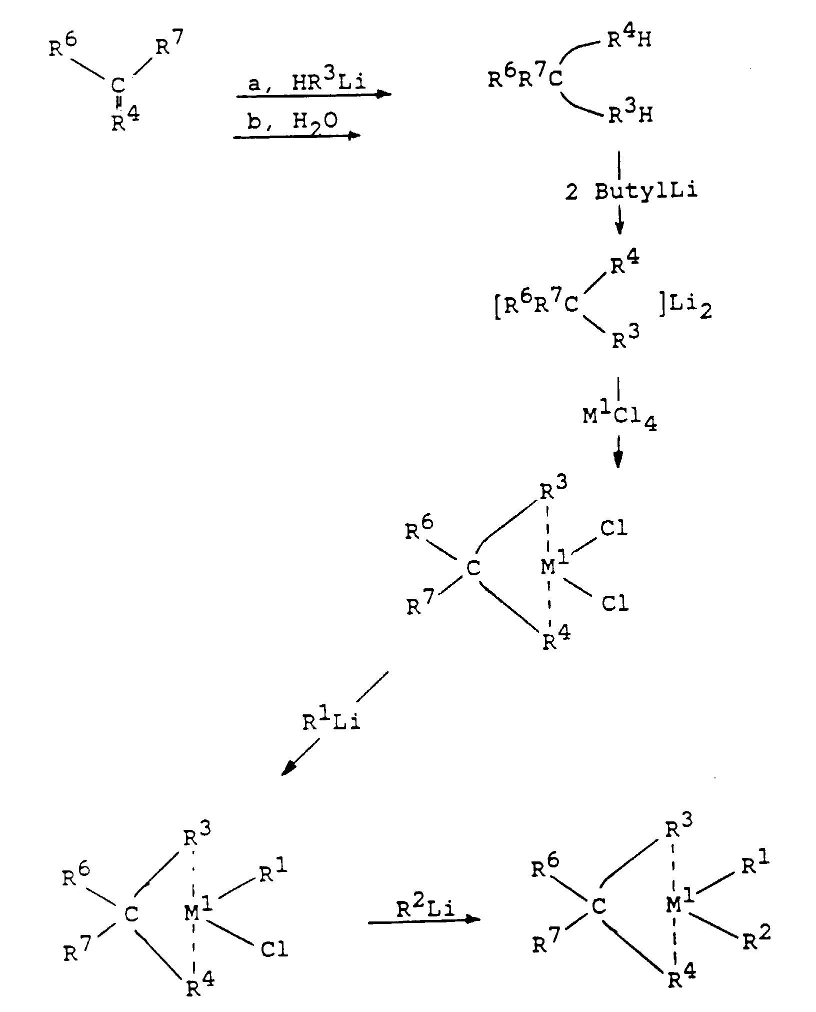

Der Cokatalysator ist ein Aluminoxan der Formel II 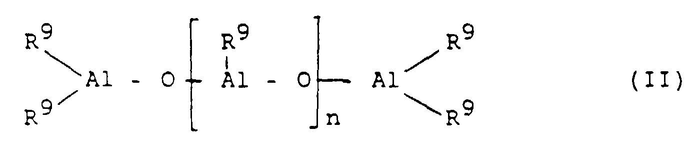 für den linearen Typ und/oder der Formel III 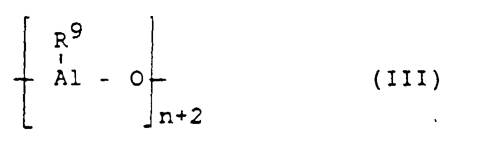 für den cyclischen Typ. In diesen Formeln bedeuten R⁹ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxan besteht darin, Aluminiumtrialkyl, vorzugsweise Aluminiumtrimethyl, in dem im Polymerisationskessel vorgelegten Suspensionsmittel zu lösen und dann die Aluminiumverbindung mit Wasser umzusetzen.

Neben den zuvor geschilderten Verfahren zur Herstellung von Aluminoxanen gibt es weitere, welche brauchbar sind.

Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Kozentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise -30 bis 120°C, insbesondere 50 bis 90°C, durchgeführt.

Der Gesamtdruck im Polymerisationssystem beträgt 0,5 bis 200 bar. Bevorzugt ist die Polymerisation in dem technisch besonders interessanten Druckbereich von 5 bis 60 bar. Dabei wird die Metallocenverbindung in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁵ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein in Bezug auf Ziegler-Katalysatoren inertes Lösemittel verwendet, also aliphatische oder aromatische Kohlenwasserstoffe. Bevorzugt sind aliphatische Kohlenwasserstoffe, wie beispielsweise Butan, Pentan, Hexan, Heptan, Isooctan, Cyclohexan, Methylcyclohexan oder Benzin- bzw. hydrierte Dieselölfraktionen.

Neben der Homopolymerisation von Ethylen werden die erfindungsgemäßen Katalysatorsysteme zur Copolymerisation von Ethylen mit einem 1-Olefin mit 3 bis 20 C-Atomen eingesetzt. Beispiele für solche 1-Olefine sind Propylen, 1-Buten, 1-Hexen, 4-Methyl-1-penten und 1-Octen.

Die Molmasse des Polymerisats kann in bekannter Weise geregelt werden, vorzugsweise wird dazu Wasserstoff verwendet.

Die Dauer der Polymerisation ist beliebig, da das erfindungsgemäß zu verwendende Katalysatorsystem einen nur geringen zeitabhängigen Abfall der Polymerisationsaktivität zeigt.

Der Einsatz dieser Komplexe ergibt bei hohen Aktivitäten je nach Komplexstruktur Polyethylen und Ethylen-1-Olefin-Copolymere mit enger Molmassenverteilung (Polydispersität) in einem breiten Molmassenbereich, insbesondere Produkte mit hohen Molmassen, die sich für die Verarbeitung durch Spritzguß und Extrusion eignen und insbesondere eine hohe Verstreckbarkeit der Polymerschmelze aufweisen, und erlaubt die Erzeugung sehr verschiedenartiger Kornmorphologien des Produktes, wie hohe und niedrige Schüttdichten, extrem kleine und extrem große mittlere Korndurchmesser und unterschiedliche Kornformen. Die Vielfalt der erreichbaren Kornmorphologien eröffnet verschiedene Möglichkeiten zum Einsatz solcher Polyethylenpulver in Sinterprozessen.

Die nachfolgenden Beispiele sollen die Erfindung erläutern.

Es bedeuten
- VZ: = Viskositätszahl in cm³/g,
- M_{w}: = Molmassengewichtsmittel in g/mol
- M_{w}/Mₙ: = Molmassenverteilung ermittelt durch Gelpermeationschromatographie (GPC)
- d₅₀ =: mittlerer Korndurchmesser in µm

Die Angaben von Drucken in den Beispielen sind in bar Überdruck.

Die Dichten der Copolymeren sind nach DIN 53479, Verfahren A bestimmt worden.

Alle nachfolgender Arbeitsoperationen wurden unter Schutzgas unter Verwendung absolutierter Lösemittel durchgeführt.

### Beispiel 1:

### Darstellung von Dimethylsilylbis(1-indenyl)

Eine Lösung von 30 g (0,23 mol) über Aluminiumoxid filtriertes Inden (techn., ~91 %) in 200 cm³ Diethylether wurde unter Eiskühlung mit 80 cm³ (0,20 mol) einer 2,5 molaren Lösung von n-Butyllithium in Hexan versetzt. Man rührte den Ansatz noch 15 min bei Raumtemperatur und gab die orangefarbene Lösung über eine Kanüle innerhalb 2 Stunden zu einer Lösung von 13,0 g (0,10 mol) Dimethyldichlorsilan (99 %) in 30 cm³ Diethylether. Die orangefarbene Suspension wurde über Nacht gerührt und dreimal mit 100 - 150 cm³ Wasser ausgeschüttelt. Die gelbe organische Phase wurde zweimal über Natriumsulfat getrocknet und im Reaktionsverdampfer eingedampft. Das verbleibende orange Öl wurde 4 bis 5 Stunden im Ölpumpenvakuum bei 40°C gehalten und von überschüssigem Inden befreit, wobei ein weißer Niederschlag ausfiel. Durch Zugabe von 40 cm³ Methanol und Kristallisation bei -35°C ließen sich insgesamt 20,4 g (71 %) derVerbindung Dimethylsilylbis(1-indenyl) als weißes bis beiges Pulver isolieren (2 Diastereomere). Fp 79-81°C.

### Beispiel 2:

### Darstellung von rac-Dimethylsilylbis(1-indenyl)zirkondichlorid (Metallocen A)

Eine Lösung von 5,6 g (19,4 mmol) Dimethylsilylbis(1-indenyl) in 40 cm³ THF wurde bei Raumtemperatur langsam mit 15,5 cm³ (38,7 mmol) einer 2,5 molaren Hexan-Lösung von Butyllithium versetzt. 1 Stunde nach Beendigung der Zugabe wurde die tiefrote Lösung innerhalb 4-6 Stunden zu einer Suspension von 7,3 g (19,4 mmol) ZrCl₄·2 THF in 60 cm³ THF zugetropft. Nach 2 Stunden Rühren wurde der orange Niederschlag über eine Glasfritte abgesaugt und aus CH₂Cl₂ umkristallisiert. Man erhielt 1,0 g (11 %) des Metallocens A in Form oranger Kristalle, die sich ab 200°C allmählich zersetzen.

Korrekte Elementaranalysen. Das El-Massenspektrum zeigte M⁺= 448. 1H-NMR Spektrum (CDCl₃): 7,04-7,60 (m, 8, arom. H), 6,90 (dd, 2, β-Ind H), 6,08 (d, 2, α-Ind H), 1,12 (s, 6, SiCH₃).

### Beispiel 3:

### Darstellung von rac-Diphenylsilylbis(1-indenyl)zirkondichlorid (Metallocen B)

Eine Lösung von 20 g (48,5 mmol) (C₆H₅)₂Si (Ind)₂, hergestellt aus (C₆H₅)₂SiCl₂ und Lithiumindenyl analog Beispiel 1, in 200 cm³ Diethylether wurde bei 0°C mit 40 cm³ (100 mmol) Butyllithium (2,5 molar in Hexan) umgesetzt. Nach 2 Stunden Rühren bei Raumtemperatur wurde das Lösemittel abgezogen, der Rückstand mit 100 cm³ Hexan verrührt und abfiltriert. Nach dem Trocknen im Ölpumpenvakuum wurde das Dilithiosalz zu einer Suspension von 11,3 g (48,5 mmol) ZrCl₄ in 150 cm³ CH₂Cl₂ bei -78°C gegeben. Die Mischung wurde über Nacht gerührt und erwärmte sich auf Raumtemperatur. Die rote Lösung wurde eingeengt und der ausgefallene Niederschlag über eine Fritte abfiltriert. Die Extraktion mit Toluol lieferte 2,0 g (7 %) Metallocen B als oranges Pulver. Korrekte Elementaranalysen. 1H-NMR-Spektrum (CDCl₃): 6,8-8,2 (m, 18, arom. H), 7,03 (dd, 2,β-Ind H), 6,30 (d, 2, α-Ind H).

### Beispiel 4:

### Darstellung von rac-Dimethylsilylbis(1-(3-methylindenyl)zirkondichlorid - (Metallocen G)

Eine Lösung von 4,89 g (15,5 mmol) (CH₃)₂Si (Melnd)₂ hergestellt aus (CH₃)₂SiCl₂ und 3-Methylindenyllithium analog Beispiel 1, wurde mit 12,5 cm³ (30,5 mmol) Butyllithium und 5,84 g (15,5 mmol) ZrCl₄·2THF analog Beispiel 2 umgesetzt. Nach dem Abziehen des Lösemittels wurde der Rückstand mit Toluol extrahiert. Der aus Toluol beim Einengen und Abkühlen ausgefallene Niederschlag wurde aus CHCl₃ umkristallisiert. Es wurden 800 mg (10%) Metallocen G in Form orangeroter Kristalle erhalten. Korrekte Elementaranalysen. 1H-NMR-Spektrumm (CDCI₃): 7,0-7,5 (m, 8, arom. H), 5,71 (s, 2, α-Ind H), 2,30 (s, 6, Ind CH₃), 1,07 (s, 6, SiCH₃).

### Beispiel 5:

### Darstellung von Dimethylsilylbis(1-(3-trimethylsilyl)cyclopentadienyl)zirkondichlorid - (Metallocen K)

Eine Lösung von 3,9 g (11,7 mmol) (CH₃)₂Si[(CH₃)₂SiCp]₂, hergestellt aus Li₂[(CH₃)₂Si(Cp)₂] und (CH₃)₃SiCl, wurde mit 9,4 cm³ (23,4 mmol) Butyllithium und 4,4 g (11,7 mmol) ZrCl₄·2THF analog Beispiel 2 umgesetzt. Nach dem Abziehen des Lösemittels wurde der Rückstand mit Diethylether extrahiert. Der nach Abziehen des Diethylethers verbleibende Rückstand wurde aus CHCl₃ umkristallisiert. Man erhielt 0,8 g (14 %) des Komplexes als beige Kristalle. Korrekte Elementaranalysen. 1H-NMR-Spektrum: (CDCl₃): 6,95 (dd, 2, CpH), 6,12 (t, 2, CpH), 5,96 (t, 2, CpH), 0,72 (s, 6, Si(CH₃)₂), 0,25 (s, 9, Si(CH₃)₃). Dem NMR-Spektrum war zu entnehmen, daß Metallocen K als Isomerenmischung (43 % rac-Isomeres, 57 % meso-Isomeres) vorlag.

### Beispiel 6:

### Darstellung von Isopropyl(1-indenyl)cyclopentadienylzirkondichlorid - (Metallocen P)

Eine Lösung von 6,0 g (47 mmol) Inden (91 %) in 100 cm³ Diethylether wurde bei Raumtemperatur mit 19 cm³ (47,3 mmol) Butyllithium (2,5 molar in Hexan) versetzt. Nach 1 Stunde wurde diese Lösung zu einer Lösung von 6,6-Dimethylfulven in 100 cm³ Diethylether bei -78°C zugesetzt. Nach 16 Stunden Rühren bei Raumtemperatur wurde die orange Lösung mit 400 cm³ Diethylether verdünnt und mit 100 cm³ Wasser versetzt. Die gelbe organische Phase wurde noch zweimal mit Wasser gewaschen, über Na₂SO₄ getrocknet und eingeengt. Das verbleibende braune Öl wurde an 400 g Kieselgel 60 chromatographiert. Mit Hexan + 7 % Methylenchlorid eluierte man insgesamt 7,2 g (68 %) der Verbindung Isopropyl(1-indenyl)cyclopentadienyl als gelbes Öl (2 Isomere). Eine Lösung von 7,1 g (32 mmol) dieser Verbindung in 100 cm³ Diethylether wurde bei 0°C mit 28 cm³ (70 mmol) Butyllithium (2,5 molar in Hexan) versetzt. Nach 2 Stunden Rühren bei Raumtemperatur wurde der gelbe Niederschlag über eine Glasfritte abfiltriert und mit Hexan/Diethylether (1:1) gewaschen. Nach dem Trocknen im Ölpumpenvakuum wurde das blaßgelbe Pulver bei -78°C zu einer Suspension von 7,5 g (32 mmol) ZrCl₄ in 100 cm³ Methylenchlorid zugegeben. Nach dem langsamen Aufwärmen auf Raumtemperatur wurde noch 30 min bei Raumtemperatur gerührt und über eine Glasfritte filtriert, wobei mehrmals mit Methylenchlorid nachgewaschen wurde. Das gelbe Filtrat wurde bis zur Kristallisation eingeengt. Bei -35°C kristallisierten insgesamt 2,4 g (19%) des Komplexes rac-[(CH₃)₂C(Ind)Cp]-ZrCl₂ in Form gelboranger Kristalle. Korrekte Elementaranalysen. 1H-NMR-Spektrum (CDCl₃): 6,90-7,75 (m, 4, arom. H), 6,85 (dd, 1, β-Ind-H), 6,52 (m, 2, Cp-H), 6,12 (d, 1, α-Ind-H), 5,82, 5,70 (2 x q, 2 x 1, Cp-H), 2,20; 1,95 (2 x s, 2 x 3, CH₃).

### Beispiel 7:

### Darstellung von Diphenylmethylen(9-fluorenyl)cyclopentadienylzirkondichlorid - (Metallocen Q)

Eine Lösung von 5,10 g (30,7 mmol) Fluoren in 60 cm³ THF wurde bei Raumtemperatur mit 12,3 cm³ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Zur dunkelroten Lösung wurden 60 cm³ Wasser zugesetzt, wobei sich die Lösung gelb färbte, und die Lösung ausgeetnert. Die über MgSO₄ getrocknete Etherphase wurde eingeengt und bei -35°C der Kristallisation überlassen. Man erhielt 5,1 g (42 %) 1,1-cyclopentadienyl-(9-fluorenyl)-diphenylmethan als beiges Pulver.

2,0 g (5,0 mmol) der Verbindung wurden in 20 cm³ THF gelöst und bei 0°C mit 6,4 cm³ (10 mmol) einer 1,6 molaren Lösung von Butyllithium in Hexan versetzt. Nach 15 min Rühren bei Raumtemperatur wurde das Lösemittel abgezogen, der rote Rückstand im Ölpumpenvakuum getrocknet und mehrmals mit Hexan gewaschen. Nach dem Trocknen im Ölpumpenvakuum wurde das rote Pulver bei -78°C zu einer Suspension von 1,16 g (5,0 mmol) ZrCl4 gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 cm³ CH₂Cl₂ gewaschen, im Ölpumpenvakuum getrocknet und mit 120 cm³ Toluol extrahiert. Nach Abziehen des Lösemittels und Trocknen im Ölpumpenvakuum erhielt man 0,55 g des Zirkon-Komplexes (Metallocen Q) in Form eines rosaroten Kristallpulvers.

Das orangerote Filtrat des Reaktionsansatzes wurde eingeengt und bei -35°C der Kristallisation überlassen. Aus CH₂Cl₂ kristallisieren weitere 0,34 g des Komplexes. Gesamtausbeute 1,0 g (36 %). Korrekte Elementaranalysen. Das Massenspektrum zeigte M⁺ = 556. ¹H-NMR-Spektrum (100 MHz, CDCl₃); 6,90 - 8,25 (m, 16, Flu-H, Ph-H), 6.40 (m, 2, Ph-H), 6,37 (t, 2, Cp-H), 5,80 (t, 2, Cp-H).

### Beispiele 8 - 18:

Die Metallocene C, D, E, F, H, I, L, M, N, O, R gemäß Tabelle 2 wurden analog Beispiel 1 und 2 dargestellt. Statt Dimethylchlorsilan wie in Beispiel 1 wurden dabei entsprechende andere Dihalogenverbindungen eingesetzt, die Tabelle 1 zu entnehmen sind. Bei am Fünfring substituierten Komplexen (Metallocen N und O) wurde ein entsprechend am Fünfring substituiertes Inden (analog Beispiel 4) eingesetzt. Bei dem Hafniumkomplex Metallocen R wurde statt ZrCl₄ wie in Beispiel 2 HfCl₄ eingesetzt.

**Tabelle 1**

| Beispiel | Metallocen | Dihalogenverbindung |
|---|---|---|
| 8 | C | Phenylmethyldichlorsilan |
| 9 | D | Phenylvinyldichlorsilan |
| 10 | E | Dimethyldichlorgerman |
| 11 | F | Cyclotrimethylendichlorsilan |
| 12 | H | 1,1,2,2-Tetramethyl-1,2-dichlordisilan |
| | | |
| 13 | I | 1,2-Bis(chlordimethylsilyl)ethan |
| 14 | L | 1,2-Dibromethan |
| 15 | M | 1,3-Dibrompropan |
| 16 | N | 1,2-Dibromethan |
| 17 | O | 1,2-Dibromethan |
| 18 | R | 1,1,2,2-Tetramethyl-1,2-dichlorsilan |

### Beispiel 19

### Darstellung von Phenylmethylmethylen(9-fluorenyl)cyclopentadienylhafniumdichlorid - (Metallocen T)

Das Metallocen T wurde analog Beispiel 7 dargestellt. Statt Diphenylfulven und ZrCl₄ wie in Beispiel 7 wurde aber Phenylmethylfulven und HfCl₄ eingesetzt.

### Beispiel 20

Ein trockener 16 dm³-Kessel wurde mit Stickstoff gespült und bei 20°C mit 10 dm³ eines Benzins (Siedebereich 100-120°C) gefüllt. Dann wurde der Gasraum des Kessels durch 5maliges Aufdrücken von 2 bar Ethylen und Entspannen stickstofffrei gespült. Hiernach wurde 1 bar Wasserstoff aufgedrückt und 30 cm³ toluolische Methylaluminoxanlösung (10,5 Gew.-% Methylaluminoxan, Molmasse nach kryoskopischer Bestimmung: 750 g/mol) zugegeben. Unter Rühren wurde der Kesselinhalt innerhalb von 15 Minuten auf 60°C aufgeheizt. Durch Zuführen von Ethylen unter Rühren mit 250 UPM wurde der Gesamtdruck dann auf 7 bar angehoben. Parallel dazu wurden 3,1 mg Metallocen A in 20 cm³ toluolischer Methylaluminoxanlösung (Konzentration und Qualität wie oben) gelöst und durch 15-minütiges Stehenlassen voraktiviert. Danach wurde die Lösung in den Kessel gegeben. Das Polymerisationssystem wurde auf eine Temperatur von 65°C gebracht und dann durch entsprechende Kühlung 1 Stunde bei dieser Temperatur gehalten. Der Gesamtdruck wurde während dieser Zeit durch entsprechende Zufuhr von Ethylen bei 7 bar gehalten. Es wurden 160 g Polyethylen erhalten.

Am Produkt wurden folgende Werte bestimmt:
VZ = 152 cm³/g, Schüttdichte: 320 g/dm³

### Beispiele 21 - 42

Es wurde jeweils analog Beispiel 20 verfahren, wobei jedoch folgende Größen variiert wurden:
- Art des Metallocens
- Menge des Metallocens (mg)
- Art der Methylaluminoxanlösung (Gehalt an Methylaluminoxan in Gew.-%, Molmasse M des Methylaluminoxans nach kryoskopischer Bestimmung in g/mol)
- Menge der in den Reaktor gegebenen Methylaluminoxanlösung (cm³)
- Wasserstoffeinsatz (H₂ in bar, bei zahlreichen Versuchen wurde kein Wasserstoff eingesetzt)
- Gesamtdruck P (bar)
- Polymerisationszeit t (min)
- Polymerisationstemperatur T (°C)

Die variierten Polymerisationsparameter sind Tabelle 3, die Polymerisationsergebnisse Tabelle 4 zu entnehmen.

### Beispiel 43

Ein trockener 16 dm³-Kessel wurde mit Stickstoff gespült und bei 20°C mit 10 dm³ Benzin (Siedebereich 100-120°C) gefüllt. Dann wurde der Gasraum des Kessels durch 5maliges Aufdrücken von 2 bar Ethylen und Entspannen stickstofffrei gespült. Hiernach wurden 200 cm³ 1-Hexan und 30 cm³ toluolische Methylaluminoxanlösung (10,6 Gew.-% Methylaluminoxan, Molmasse nach kryoskopischer Bestimmung: 900 g/mol) zugegeben. Unter Rühren wurde der Kessel innerhalb von 15 min auf 60°C aufgeheizt. Durch Zuführen von Ethylen unter Rühren mit 250 UPM wurde der Gesamtdruck dann auf 5 bar angehoben. Parallel dazu wurden 1,3 mg Metallocen E in 20 cm³ toluolischer Methylaluminoxanlösung (Konzentration und Qualität wie oben) gelöst und durch 15-minütiges Stehenlassen voraktiviert. Danach wurde die Lösung in den Kessel gegeben. Das Polymerisationssystem wurde auf eine Temperatur von 80°C gebracht und dann durch entsprechende Kühlung 45 min bei dieser Temperatur gehalten. Der Gesamtdruck wurde während dieser Zeit durch entsprechende Zufuhr von Ethylen bei 5 bar gehalten.
Es wurden 380 g Ethylen-1-Hexen-Copolymeres erhalten. Am Produkt wurden folgende Werte bestimmt:
VZ = 182 cm³/g
Dichte: 0,934 g/cm³

### Beispiel 44

Ein trockener 16 dm³-Kessel wurde mit Stickstoff gespült und bei 20°C mit 10 dm³ Benzin (Siedebereich 100-120°C) gefüllt. Dann wurde der Gasraum des Kessels durch 5maliges Aufdrücken von 2 bar Ethylen und Entspannen stickstofffrei gespült. Hiernach wurden 400 cm³ 1-Hexan und 30 cm³ toluolische Methylaluminoxanlösung (10,6 Gew.-% Methylaluminoxan, Molmasse nach kryoskopischer Bestimmung: 900 g/mol) zugegeben. Unter Rühren wurde der Kessel innerhalb von 15 min auf 60°C aufgeheizt. Durch Zuführen von Ethylen unter Rühren mit 250 UPM wurde der Gesamtdruck dann auf 5 bar angehoben. Parallel dazu wurden 1,3 mg Metallocen B in 20 cm³ toluolischer Methylaluminoxanlösung (Konzentration und Qualität wie oben) gelöst und durch 15-minütiges Stehenlassen voraktiviert. Danach wurde die Lösung in den Kessel gegeben. Das Polymerisationssystem wurde auf eine Temperatur von 70°C gebracht und dann durch entsprechende Kühlung 45 min bei dieser Temperatur gehalten. Der Gesamtdruck wurde während dieser Zeit durch entsprechende Zufuhr von Ethylen bei 5 bar gehalten.
Es wurden 520 g Ethylen-1-Hexen-Copolymeres erhalten. Am Produkt wurden folgende Werte bestimmt:
VZ = 168 cm³/g
Dichte: 0,924 g/cm³

### Beispiel 45

Ein trockener 1,5 dm³-Reaktor mit Paddelrührer wurde mit Stickstoff gespült und bei 20°C und Atmosphärendruck mit 200 g Natriumchlorid als Rührhilfe in der Gasphase befüllt. Dann wurden 5 bar Ethylen aufgedrückt und der Rührer auf 600 UPM eingestellt. Durch eine Sprühdüse wurden dann 5 cm³ einer toluolischen Methylaluminoxanlösung (29,3 Gew.-% Methylaluminoxan mit Molmasse 1100 g/mol nach kryoskopischer Bestimmung) in den Reaktor gedrückt und der Inhalt 15 min gerührt.

Parallel dazu wurden 1,1 mg Metallocen B in 3 cm³ toluolischer Methylaluminoxanlösung (Konzentration und Qualität wie oben) gelöst und durch 15-minütiges Stehenlassen voraktiviert. Danach wurde diese Lösung ebenfalls durch eine Sprühdüse in den Reaktor injiziert und die Temperatur des Systems auf 80°C angehoben. Nach 20 min Polymerisationszeit wurde der Reaktor entspannt, der Inhalt entleert und durch Auflösen des Natriumchlorids in Wasser, Abfiltrieren und Trocknen das entstandene Polymere isoliert.
Man erhielt 14,5 g Polyethylen mit VZ = 240 cm³/g.

### Beispiel 46

Es wurde wie in Beispiel 45 verfahren; statt 1,1 mg Metallocen B wurden jedoch 0,9 mg Metallocen E eingesetzt. Man erhielt 10,4 g Polyethylen mit einer Viskositätszahl VZ = 230 cm³/g.

**Tabelle 2**

| Metallocen | Kurzbezeichnung |
|---|---|
| rac-Dimethylsilylbis(1-indenyl)zirkondichlorid | A |
| rac-Diphenylsilylbis(1-indenyl)zirkondichlorid | B |
| rac-Phenylmethylsilylbis(1-indenyl)zirkondichlorid | C |
| rac-Phenylvinylsilylbis(1-indenyl)zirkondichlorid | D |
| rac-Dimethylgermylbis(1-indenyl)zirkondichlorid | E |
| 1-Silacyclobutylbis(1'-indenyl)zirkondichlorid | F |
| (Isomerenmischung: 57 % rac-Isomeres, 43 % meso-Isomeres) | |
| rac-Dimethylsilylbis(1-(3-methylindenyl))zirkondichlorid | G |
| rac-1,1,2,2-Tetramethyldisilaethylenbis(1'-indenyl)zirkondichlorid | H |
| rac-1,1,4,4-Tetramethyl-1,4-disilabutylenbis(1'-indenyl)zirkondichlorid | I |
| Dimethylsilylbis(1-(3-trimethylsilyl)cyclopentadienyl)zirkondichlorid | K |
| (Isomerenmischung: 43 % rac-Isomeres, 57 % meso-Isomeres) | |
| rac-Ethylenbis(1-indenyl)zirkondichlorid | L |
| Propylenbis(1-indenyl)zirkondichlorid | M |
| Ethylenbis(1-(3-trimethylsilylindenyl))zirkondichlorid | N |
| (Isomerenmischung: 78 % rac-Isomeres, 22 % meso-Isomeres) | |
| rac-Ethylenbis(1-(3-allyldimethylsilylindenyl))zirkondichlorid | O |
| Isopropyl(1-indenyl)cyclopentadienylzirkondichlorid | P |
| Diphenylmethylen(9-fluorenyl)cyclopentadienylzirkondichlorid | Q |
| rac-1,1,2,2-Tetramethyldisilaethylenbis(1'-indenyl)hafniumdichlorid | R |
| Phenylmethylmethylen(9-fluorenyl)cyclopentadienylhafniumdichlorid | T |

**Tabelle 3**

| Beispiel | Metallocen | | MAO-Lösung | | Menge in Reaktor (cm³) | H₂ (bar) | P (bar) | t (min) | T (°C) |
|---|---|---|---|---|---|---|---|---|---|
| | Art | Menge (mg) | Gehalt (Gew.-%) | MM (g/mol) | | | | | |
| 21 | A | 4,0 | 10,5 | 750 | 50 | - | 5 | 60 | 65 |
| 22 | B | 3,9 | 10,6 | 900 | 30 | - | 5 | 60 | 65 |
| 23 | C | 7,2 | 10,7 | 1200 | 30 | - | 5 | 60 | 65 |
| 24 | D | 12,2 | 10,6 | 900 | 30 | - | 5 | 60 | 65 |
| 25 | E | 8,0 | 10,6 | 900 | 30 | - | 5 | 60 | 65 |
| 26 | F | 5,9 | 10,6 | 900 | 30 | - | 5 | 60 | 65 |
| 27 | G | 2,5 | 10,5 | 750 | 30 | - | 5 | 60 | 65 |
| 28 | G | 1,3 | 10.5 | 750 | 50 | - | 5 | 60 | 65 |
| 29 | G | 1,2 | 10,6 | 900 | 30 | 2 | 5 | 60 | 75 |
| 30 | H | 1,4 | 9,9 | 1100 | 30 | - | 5 | 60 | 65 |
| 31 | I | 48,3 | 9,9 | 1100 | 30 | - | 5 | 60 | 65 |
| 32 | K | 5,3 | 9,7 | 1000 | 60 | - | 5 | 60 | 70 |
| 33 | L | 1,2 | 10,1 | 1300 | 40 | - | 5 | 300 | 65 |
| 34 | M | 7,3 | 9,9 | 1100 | 30 | - | 6 | 60 | 65 |
| 35 | M | 4,3 | 10.1 | 1300 | 30 | - | 5 | 120 | 65 |
| 36 | N | 6,8 | 9,9 | 1100 | 30 | - | 6 | 65 | 65 |
| 37 | N | 3,9 | 10,1 | 1300 | 30 | 0,5 | 5,5 | 80 | 65 |
| 38 | O | 11,6 | 10,7 | 1200 | 30 | - | 5 | 60 | 65 |
| 39 | P | 30,5 | 10,6 | 900 | 30 | - | 5 | 60 | 65 |
| 40 | Q | 5,0 | 10,6 | 900 | 30 | - | 5 | 60 | 65 |
| 41 | R | 6,9 | 10,1 | 1300 | 30 | - | 5 | 60 | 65 |
| 42 | T | 21,6 | 10,7 | 1200 | 30 | - | 6 | 60 | 65 |

**Tabelle 4**

| Beispiel | Polymer-Ausbeute (g) | VZ (cm³/g) | M_{w} (g/mol) | M_{w}/M_{w} | Schüttdichte (g/dm³) | d₅₀ (µm) |
|---|---|---|---|---|---|---|
| 21 | 300 | 323 | n.g. | n.g. | 210 | 50 |
| 22 | 140 | 361 | n.g. | n.g. | 280 | n.g. |
| 23 | 65 | 268 | n.g. | n.g. | 300 | n.g. |
| 24 | 90 | 319 | n.g. | n.g. | 310 | n.g. |
| 25 | 290 | 366 | n.g. | n.g. | 140 | n.g. |
| 26 | 140 | 392 | n.g. | n.g. | 180 | n.g. |
| 27 | 450 | 323 | 190000 | 4,5 | 170 | 150 |
| 28 | 500 | 313 | n.g. | n.g. | 200 | 180 |
| 29 | 240 | 36 | n.g. | n.g. | 400 | n.g. |
| 30 | 170 | 911 | 720000 | 3,5 | 210 | 3500 |
| 31 | 590 | 642 | 480000 | 3,7 | 60 | n.g. |
| 32 | 1450 | 162 | n.g. | n.g. | 300 | 50 |
| 33 | 590 | 198 | n.g. | n.g. | 140 | 580 |
| 34 | 220 | 551 | 400000 | 4,0 | 70 | n.g. |
| 35 | 310 | 624 | n.g. | n.g. | 80 | 30 |
| 36 | 480 | 227 | 120000 | 2,3 | 120 | n.g. |
| 37 | 450 | 147 | n.g. | n.g. | 300 | n.g. |
| 38 | 75 | 230 | n.g. | n.g. | 230 | n.g. |
| 39 | 150 | 78 | n.g. | n.g. | 200 | n.g. |
| 40 | 100 | 746 | n.g. | n.g. | 130 | n.g. |
| 41 | 35 | 1222 | n.g. | n.g. | n.g. | n.g. |
| 42 | 60 | 711 | n.g. | n.g. | n.g. | n.g. |
| n.g. = nicht gemessen | | | | | | |

## Patentansprüche

1. Verfahren zur Herstellung von Ethylenpolymeren durch Polymerisation von Ethylen oder Copolymerisation von Ethylen mit 1-Olefinen mit 3 bis 20 C-Atomen bei einer Temperatur von -60 bis 200°C, bei einem Druck von 0,5 bis 200 bar, in Lösung, in Suspension oder in der Gasphase, in Gegenwart eines Katalysators, welcher aus einem Metallocen als Übergangsmetallkomponente und einem Aluminoxan der Formel II 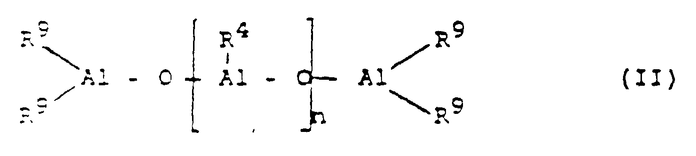 für den linearen Typ und/oder der Formel III 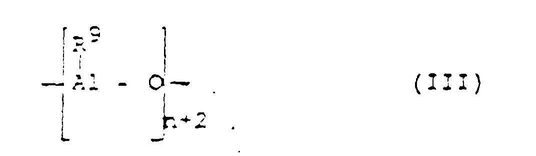 für den cyclischen Typ besteht, wobei in den Formeln II und III R⁹ eine C₁-C₆-Alkylgruppe oder Phenyl oder Benzyl bedeutet und n eine ganze Zahl von 2 bis 50 ist, dadurch gekennzeichnet, daß die Polymerisation in Gegenwart eines Katalysators durchgeführt wird, dessen Übergangsmetallkomponente eine Verbindung der Formel I 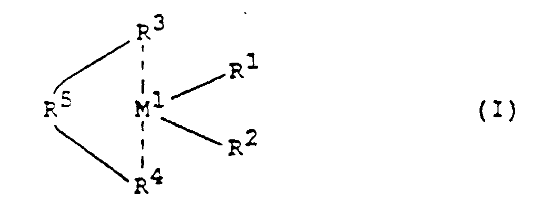 ist, worin
M¹ Titan, Zirkon, Hafnium, Vanadium, Niob oder Tantal ist,
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³ und R⁴ gleich oder verschieden sind und R³ Indenyl oder Fluorenyl ist, wobei die Grundkörper noch zusätzliche Substituenten tragen können, und R⁴ Cyclopentadienyl oder Fluorenyl ist, wobei die Grundkörper noch zusätzliche Substituenten tragen können,
R⁵ 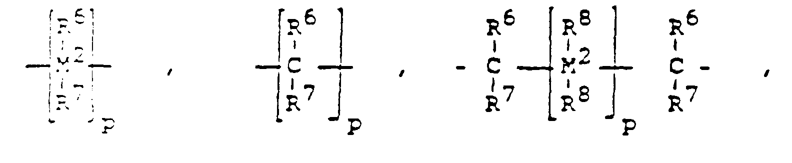 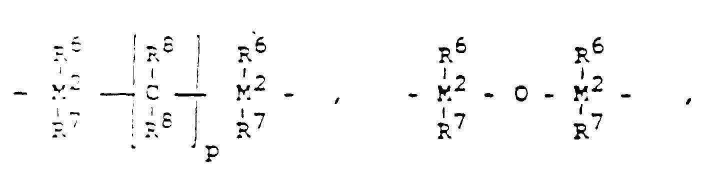 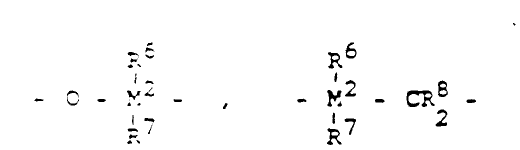 = BR⁶, = AlR⁶, -Ge-, -Sn-, -O-, -S-, = SO, = SO₂, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und oder R⁷ und R⁸ jeweils mit den die verbindenden Atomen einen Ring bilden,
M² Silizium, Germaniun oder Zinn ist und
p die Zahlen 1, 2, 3, 4, 5 bedeutet, wobei als Metallocen Indenylcyclopentadienyl-dimethylsilylhafniumdichlorid oder Indenylcyclopentadienyl-dimethylsilyl-zirkoniumdichlorid ausgeschlossen sind.

2. Verfahren nach Anspruch 1, dadurch gekennzeichnet, daß R³ Indenyl und R⁴ Cyclopentadienyl ist, wobei die Grundkörper noch zusätzliche Substituenten tragen können.

3. Verfahren nach Anspruch 1, dadurch gekennzeichnet, daß als Metallocen Isopropyl(1-indenyl)cyclopentadienylzirkondichlorid eingesetzt wird.

4. Verbindung der Formel I 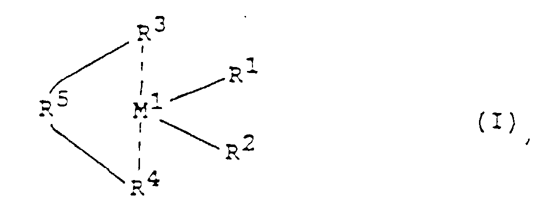 worin
M¹ Titan, Zirkon, Hafnium, Vanadium, Niob oder Tantal ist,
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³ und R⁴ gleich oder verschieden sind und R³ Indenyl oder Fluorenyl ist, wobei die Grundkörper noch zusätzlichte Substituenten tragen können, und R⁴ Cyclopentadienyl oder Fluorenyl ist, wobei die Grundkörper noch zusätzliche Substituenten tragen können,
R⁵ 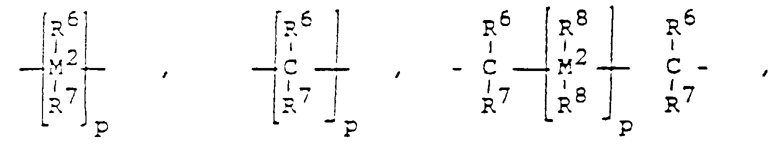 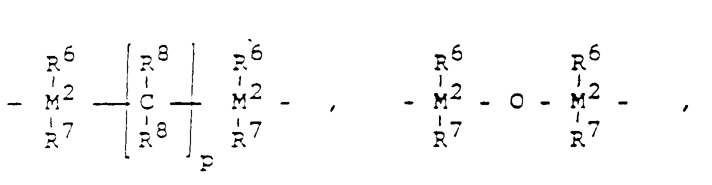 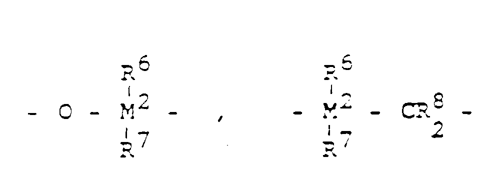 = BR⁶, = AlR⁶, -Ge-, -Sn-, -O-, -S-, = SO, - SO₂, = NR⁶, = CO, = PR⁶ oder = P(O)R⁶ ist, wobei R⁶, R⁷ und R⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgrupe, eine C₇-C₄₀-Arylalkylgruppe, eine C₈-C₄₀-Arylalkenylgruppe oder eine C₇-C₄₀-Alkylarylgruppe bedeuten oder R⁵ und R⁷ oder R⁶ und R⁸ jeweils mit den die verbindenen Atomen einen Ring bilden,
M² Silizium, Germanium oder Zinn ist und
p die Zahlen 1, 2, 3, 4, 5 bedeutet, wobei als Metallocen Indenylcyclopentadienyl-dimethylsilylhafniumdichlorid oder Indenylcyclopentadienyl-dimethylsilyl-zirkoniumdichlorid ausgeschlossen sind.

5. Verbindung nach Anspruch 5, dadurch gekennzeichnet, daß R³ Indenyl und R⁴ Cyclopentadienyl ist, wobei die Grundkörper noch zusätzliche Substituenten tragen können.

6. Verbindung nach Anspruch 5, dadurch gekennzeichnet, daß die Verbindung Isopropyl(1-indenyl)cyclopentadienylzirkondichlorid ist.

7. Katalysator, welcher aus einem Metallocen gemäß einem oder mehrere der Ansprüche 4 bis 6 als Übergangsmetallkomponente und einem Aluminoxan der Formel II 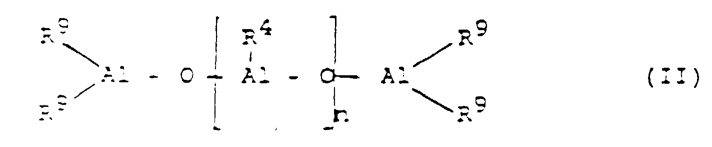 für den linearen Typ und/oder der Formel III 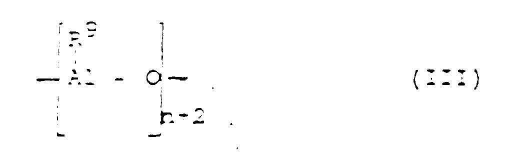 für den cyclischen Typ besteht, wobei in den Formeln II und III R⁹ eine C₁-C₆-Alkylgruppe oder Phenyl oder Benzyl bedeutet und n eine ganze Zahl von 2 bis 50 ist.

## Claims

1. A process for preparing ethylene polymers by polymerization of ethylene or copolymerization of ethylene with 1-olefins having 3 to 20 carbon atoms at a temperature of from -60 to 200 C, at a pressure of from 0.5 to 200 bar, in solution, in suspension or in the gas phase, in the presence of a catalyst comprising a metallocene as transition metal component and an aluminoxane of the formula II 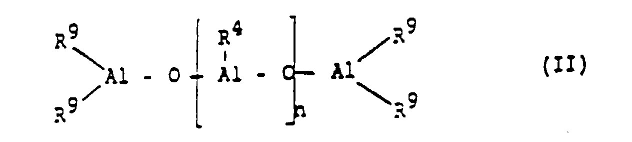 for the linear type and/or the formula III 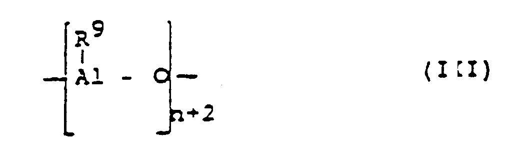 for the cyclic type, where, in the formulae II and III, R⁹ is a C₁-C₆-alkyl group or phenyl or benzyl and n is an integer from 2 to 50, which comprises carrying out the polymerization in the presence of a catalyst whose transition metal component is a compound of the formula 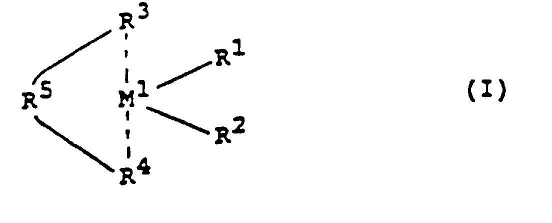 where
M¹ is titanium, zirconium, hafnium, vanadium, niobium or tantalum,
R¹ and R² are identical or different and are each a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R³ and R⁴ are identical or different and R³ is indenyl or fluorenyl, where the basic molecules can bear additional substituents, and R⁴ is cyclopentadienyl or fluorenyl, where the basic molecules can bear additional substituents,
R⁵ is 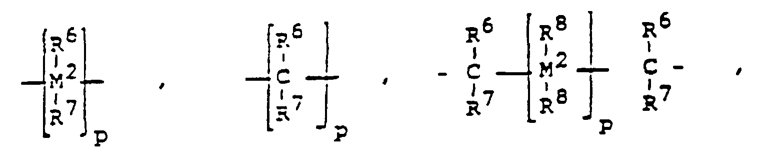 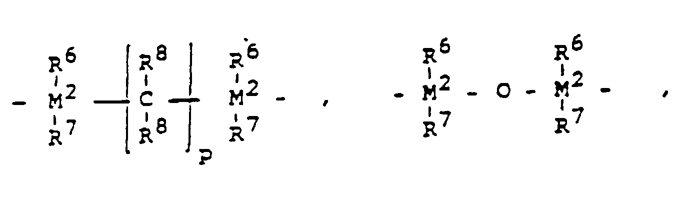 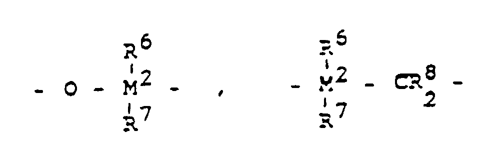 = BR⁶, = AlR⁶, -Ge-, -Sn-, -O-, -S-, = SO, = SO₂, = NR⁶, = CO, = PR⁶ or = P(O)R⁶, where R⁶, R⁷ and R⁸ are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R⁶ and R⁷ or R⁶ and R⁸, in each case together with the atoms connecting them, form a ring,
M² is silicon, germanium or tin and
p is 1, 2, 3, 4 or 5, where, as metallocene, indenylcyclopentadienyl dimethylsilylhafnium dichloride or indenylcyclopentadienyl dimethylsilylzirconium dichloride are excluded.

2. The process as claimed in claim 1, wherein R³ is indenyl and R⁴ is cyclopentadienyl, where the basic molecules can bear additional substituents.

3. The process as claimed in claim 1, wherein the metallocene used is isopropyl(1-indenyl)cyclopentadienylzirconium dichloride.

4. A compound of the formula I 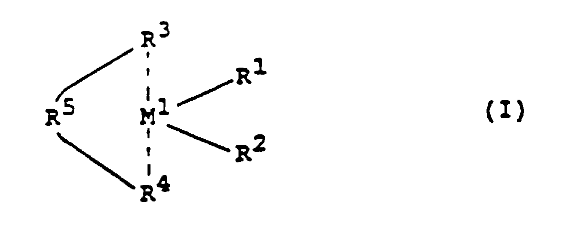 where
M¹ is titanium, zirconium, hafnium, vanadium, niobium or tantalum,
R¹ and R² are identical or different and are each a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R³ and R⁴ are identical or different and R³ is indenyl or fluorenyl, where the basic molecules can bear additional substituents, and R⁴ is cyclopentadienyl or fluorenyl, where the basic molecules can bear additional substituents,
R⁵ is 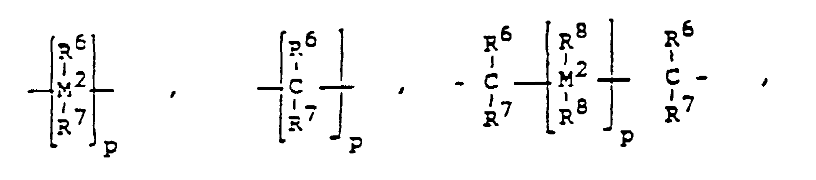 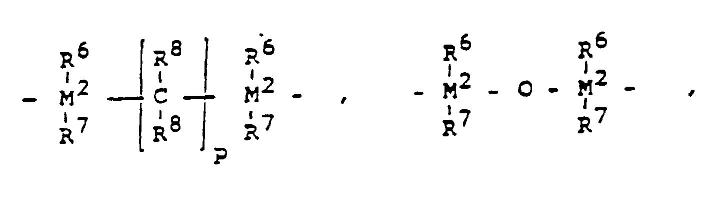 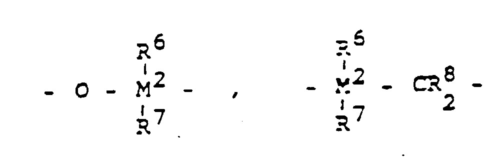 = BR⁶, = AIR⁶, -Ge-, -Sn-, -O-, -S-, = SO, = SO₂, = NR⁶, = CO, = PR⁶ or = P(O)R⁶, where R⁶, R⁷ and R⁸ are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R⁶ and R⁷ or R⁶ and R⁸, in each case together with the atoms connecting them, form a ring,
M² is silicon, germanium or tin and
p is 1, 2, 3, 4 or 5, where, as metallocene, indenylcyclopentadienyl dimethylsilylhafnium dichloride or indenylcyclopentadienyl dimethylsilylzirconium dichloride are excluded.

5. A compound as claimed in claim 4, wherein R³ is indenyl and R⁴ is cyclopentadienyl, where the basic molecules can bear additional substituents.

6. A compound as claimed in claim 5 which is isopropyl(1-indenyl)cyclopentadienylzirconium dichloride.

7. A catalyst comprising a metallocene as claimed in one or more of claims 4 to 6 as transition metal component and an aluminoxane of the formula II 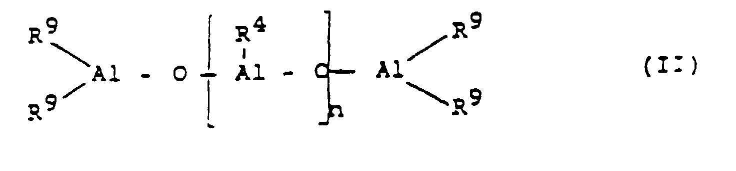 for the linear type and/or the formula III 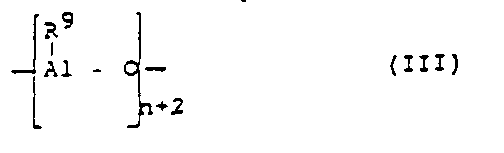 for the cyclic type, where, in the formulae II and III, R⁹ is a C₁-C₆-alkyl group or phenyl or benzyl and n is an integer from 2 to 50.

## Revendications

1. Procédé de préparation de polymères d'éthylène par polymérisation d'éthylène ou copolymérisation d'éthylène avec des 1-oléfines comportant de 3 à 20 atomes de carbone, à une pression de 0,5 à 200 bar, en solution, en suspension ou dans la phase gazeuse, en présence d'un catalyseur consistant en un métallocène en tant que composé de métal de transition et un alumoxane de la formule générale II 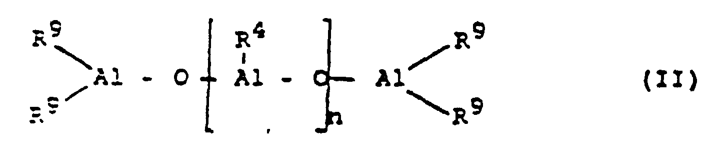 pour le type linéaire et/ou de la formule III 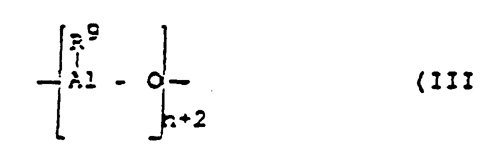 pour le type cyclique, où dans les formules Il et III R⁹ représente un radial alkyle en C₁ à C₆, phényle ou benzyle et n est un nombre entier de 2 à 50, caractérisé en ce que la polymérisation est effectuée en présence d'un catalyseur dont le composant de métal de transition est un composé de la formule I 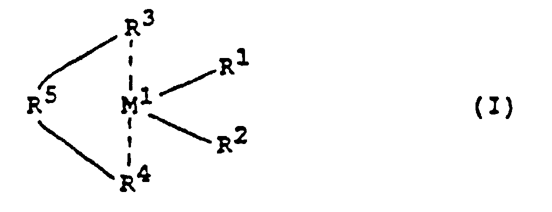 dans laquelle
M¹ représente le titane, le zirconium, l'hafnium, le vanadium, le niobium ou le tantale,
R¹ et R² sont identiques ou différents et représentent un atome d'hydrogène, un atome d'halogène, un radical alkyle en C₁ à C₁₀, alcoxy en C₁ à C₁₀, aryle en C₆ à C₁₀, aryloxy en C₆ à C₁₀, alcényle en C₂ à C₁₀, arylalkyle en C₇ à C₄₀, alkylaryle en C₇ à C₄₀, ou arylalcényle en C₈ à C₄₀,
R³ et R⁴ sont identiques ou différents et R³ représente un radical indényle ou fluorényle, la structure de base pouvant encore porter des substituants additionnels, et R⁴ représente un radical cyclopentadiényle ou fluorényle, la structure de base pouvant encore porter des substituants additionnels, et
R⁵ représente 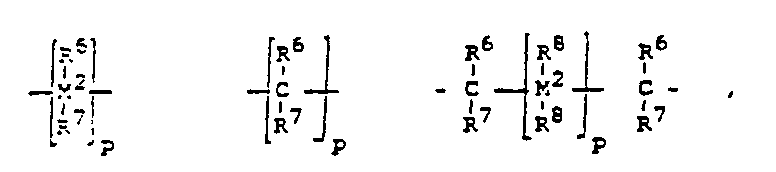 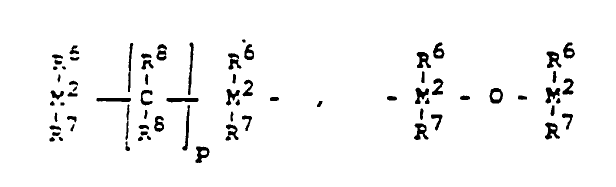 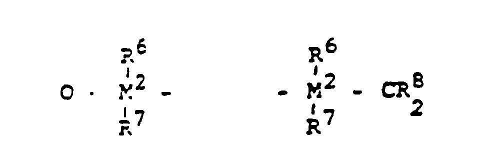 = BR⁶, = AIR⁶, -Ge-, -Sn-, -O-, -S-, = SO, = SO₂, = NR⁶, = CO, = PR⁶ ou =P(O)R⁶, où R⁶, R⁷ et R⁸ sont identiques ou différents et représentent un atome d'hydrogène, un atome d'halogène, un radical alkyle en C₁ à C₁₀, fluoroalkyle en C₁ à C₁₀, fluoroaryle en C₆ à C₁₀, aryle en C₆ à C₁₀, alcoxy en C₁ à C₁₀, alcényle en C₂ à C₁₀, arylalkyle en C₇ à C₄₀, arylalcényle en C₈ à C₄₀ ou alkylaryle en C₇ à C₄₀, ou bien R⁶ et R⁷ ou R⁶ et R⁸ forment à chaque fois un noyau avec les atomes qui les relient,
M² représente le silicium, le germanium ou l'étain et
p est égal à 1, 2, 3, 4, 5, le métallocène n'étant pas du dichlorure d'indénylcyclopentadiényldiméthylsilylhafnium ni du dichlorure d'indénylcyclopentadiényldiméthylsilylzirconium.

2. Procédé selon la revendication 1, caractérisé en ce que R³ représente un radical indényle et R⁴ un radical cyclopentadiényle, les structures de base pouvant encore porter des substituants additionnels.

3. Procédé selon la revendication 1, caractérisé en ce que l'on met en oeuvre en tant que métallocène du dichlorure d'isopropyl(1-indényl)cyclopentadiénylzirconium.

4. Composé de la formule 1 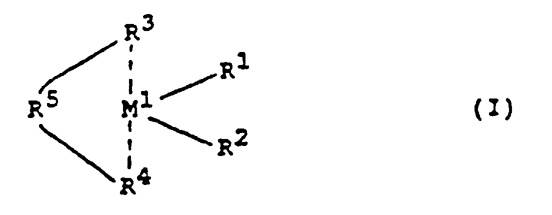 dans laquelle
M¹ représente le titane, le zirconium, l'hafnium, le vanadium, le niobium ou le tantale,
R¹ et R² sont identiques ou différents et représentent un atome d'hydrogène, un atome d'halogène, un radical alkyle en C₁ à C₁₀, alcoxy en C₁ à C₁₀, aryle en C₆ à C₁₀, aryloxy en C₆ à C₁₀, alcényle en C₂ à C₁₀, arylalkyle en C₇ à C₄₀, alkylaryle en C₇ à C₄₀, ou arylalcényle en C₈ à C₄₀,
R³ et R⁴ sont identiques ou différents et R³ représente un radical indényle ou fluorényle, la structure de base pouvant encore porter des substituants additionnels, et R⁴ représente un radical cyclopentadiényle ou fluorényle, la structure de base pouvant encore porter des substituants additionnels, et
R⁵ représente 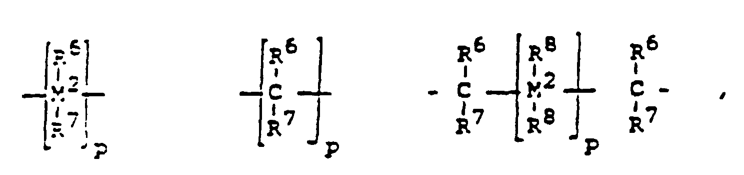 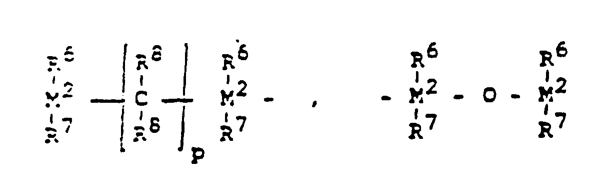 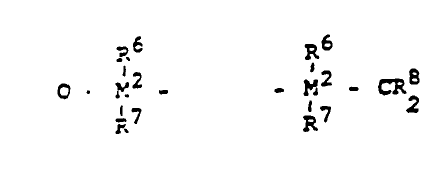 = BR⁶, = AIR⁶, -Ge-, -Sn-, -O-, -S-, = SO, = SO₂, = NR⁶, = CO, = PR⁶ ou =P(O)R⁶, où R⁶, R⁷ et R⁸ sont identiques ou différents et représentent un atome d'hydrogène, un atome d'halogène, un radical alkyle en C₁ à C₁₀, fluoroalkyle en C₁ à C₁₀, fluoroaryle en C₆ à C₁₀, aryle en C₆ à C₁₀, alcoxy en C₁ à C₁₀, alcényle en C₂ à C₁₀, arylalkyle en C₇ à C₄₀, arylalcényle en C₈ à C₄₀ ou alkylaryle en C₇ à C₄₀, ou bien R⁶ et R⁷ ou R⁶ et R⁸ forment à chaque fois un noyau avec les atomes qui les relient,
M² représente le silicium, le germanium ou l'étain et
p est égal à 1, 2, 3, 4, 5, le métallocène n'étant pas du dichlorure d'indénylcyclopentadiényldiméthylsilylhafnium ni du dichlorure d'indénylcyclopentadiényldiméthylsilylzirconium.

5. Composé selon la revendication 4, caractérisé en ce que R³ représente un radical indényle et R⁴ un radical cyclopentadiényle, la structure de base pouvant encore porter des substituants additionnels.

6. Composé selon la revendication 5, caractérisé en ce que le composé est du dichlorure d'isopropyl(1-indényl)cyclopentadiénylzirconium.

7. Catalyseur constitué d'un métallocène selon une ou plusieurs des revendications 4 à 6 en tant que composant de métal de transition et d'un alumoxane de la formule II 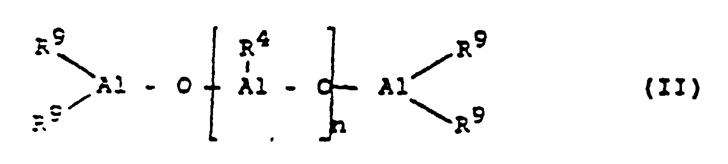 pour le type linéaire et/ou de la formule III 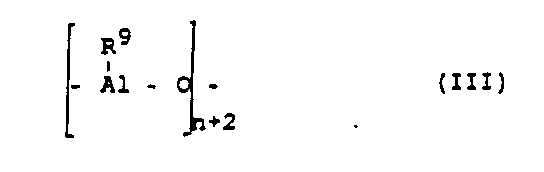 pour le type cyclique, caractérisé en ce que, dans les formules II et III, R⁹ représente un radical alkyle en C₁ à C₆, phényle ou benzyle, et n est un nombre entier de 2 à 50.
